(19) Europäisches Patentamt / European Patent Office / Office européen des brevets

(11) **EP 4 722 612 A1**

(12) **EUROPEAN PATENT APPLICATION**
published in accordance with Art. 153(4) EPC

(43) Date of publication:
08.04.2026 Bulletin 2026/15

(21) Application number: 24814924.7

(22) Date of filing: 12.03.2024

(51) International Patent Classification (IPC):
*F25B 1/00* (2006.01)    *C09K 5/04* (2006.01)

(52) Cooperative Patent Classification (CPC):
**C09K 5/04; F25B 1/00**

(86) International application number:
**PCT/JP2024/009628**

(87) International publication number:
**WO 2024/247437 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 31.05.2023  JP 2023090428
09.08.2023  JP 2023130517

(71) Applicant: AGC INC.
Chiyoda-ku,
Tokyo 1008405 (JP)

(72) Inventor: HAYAMIZU, Hiroki
Tokyo 100-8405 (JP)

(74) Representative: Müller-Boré & Partner
Patentanwälte PartG mbB
Friedenheimer Brücke 21
80639 München (DE)

(54) **HEAT CYCLE SYSTEM AND HEAT CYCLE METHOD**

(57) Provided are a thermal cycling system and a thermal cycling method, thermal cycling system including: a working medium; a compressor that compresses a vapor of the working medium; a condenser that cools and liquefies the vapor of the working medium discharged from the compressor; a pressure reducing device that reduces a pressure of the working medium discharged from the condenser; and an evaporator that heats the working medium discharged from the pressure reducing device, in which the working medium includes HFO-1123 and HFO-1234yf, a content of the HFO-1123 is from 31.5 to 42.0 mass% with respect to a total content of the HFO-1123 and the HFO-1234yf, the total content of the HFO-1123 and the HFO-1234yf is 99.0 mass% or more with respect to a total amount of the working medium, and the evaporator is controlled such that an evaporation temperature of the working medium is -40°C or higher.

FIG.1

EP 4 722 612 A1

**Description**

Technical Field

The present disclosure relates to a thermal cycling system and a thermal cycling method.

Background Art

Conventionally, working mediums such as working mediums for heat cycles, for example, refrigerants for freezing machines, refrigerants for air-conditioning equipment, working mediums for electric power generation (for example, waste heat recovery power generation), working mediums for latent heat transport apparatuses (for example, heat pipes), and secondary coolant mediums have been fingered as affecting the stratospheric ozone layer and affecting global warming. For example, since R410A, R407C, R404A, R32, and the like used in a cooling system have a high global warming potential, substitutes have been studied.

Patent Document 1 describes a working medium for a thermal cycle, containing trifluoroethylene and 2,3,3,3-tetrafluoropropene, in which a ratio of a total amount of the trifluoroethylene and the 2,3,3,3-tetrafluoropropene to a total amount of the working medium is from 70 to 100 mass%, and a ratio of the trifluoroethylene to the total amount of the trifluoroethylene and the 2,3,3,3-tetrafluoropropene is from 35 to 95 mass%.

Patent Document 2 describes a substitute refrigerant composition for R404A, the composition containing a refrigerant, in which the refrigerant includes HFO-1123 and HFO-1234yf, a proportional content of a total amount of the HFO-1123 and the HFO-1234yf is 99.5 mass% or more with respect to a total amount of the refrigerant, and with respect to the total of the HFO-1123 and the HFO-1234yf, a proportional content of the HFO-1123 is from 42.5 to 46.1 mass%, and a proportional content of the HFO-1234yf is from 53.9 to 57.5 mass%.

Citation List

Patent Documents

    Patent Document 1: WO 2015/005290 A
    Patent Document 2: Japanese Patent No. 7249498

SUMMARY OF INVENTION

Technical Problem

An object of an embodiment of the disclosure is to provide a thermal cycling system and a thermal cycling method capable of obtaining excellent cycle performance in an environment with a low evaporation temperature using a working medium having a low global warming potential.

Solution to Problem

The disclosure includes the following aspects.

    <1> A thermal cycling system including:

        a working medium;
        a compressor that compresses a vapor of the working medium;
        a condenser that cools and liquefies the vapor of the working medium discharged from the compressor;
        a pressure reducing device that reduces a pressure of the working medium discharged from the condenser; and
        an evaporator that heats the working medium discharged from the pressure reducing device,
        in which the working medium includes
        trifluoroethylene and 2,3,3,3-tetrafluoropropene,
        a content of the trifluoroethylene is from 31.5 to 42.0 mass% with respect to a total content of the trifluoroethylene and the 2,3,3,3-tetrafluoropropene,
        the total content of the trifluoroethylene and the 2,3,3,3-tetrafluoropropene is 99.0 mass% or more with respect to a total amount of the working medium, and

the evaporator is controlled such that an evaporation temperature of the working medium is -40°C or higher.

<2> The thermal cycling system according to <1>, in which the content of the trifluoroethylene is from 34.5 to 42.0 mass% with respect to the total content of the trifluoroethylene and the 2,3,3,3-tetrafluoropropene.

<3> The thermal cycling system according to <1>, in which the content of the trifluoroethylene is from 34.5 to 39.0 mass% with respect to the total content of the trifluoroethylene and the 2,3,3,3-tetrafluoropropene.

<4> The thermal cycling system according to <1>, in which the content of the trifluoroethylene is from 40.5 to 42.0 mass% with respect to the total content of the trifluoroethylene and the 2,3,3,3-tetrafluoropropene.

<5> A thermal cycling method including:

compressing a vapor of a working medium;

cooling and liquefying the vapor of the working medium;

reducing a pressure of the liquefied working medium; and

heating the pressure-reduced working medium at an evaporation temperature of -40°C or higher,

in which the working medium includes

trifluoroethylene and 2,3,3,3-tetrafluoropropene,

a content of the trifluoroethylene is from 31.5 to 42.0 mass% with respect to a total content of the trifluoroethylene and the 2,3,3,3-tetrafluoropropene, and

the total content of the trifluoroethylene and the 2,3,3,3-tetrafluoropropene is 99.0 mass% or more with respect to a total amount of the working medium.

Advantageous Effects of Invention

According to an embodiment of the disclosure, it is possible to provide a thermal cycling system and a thermal cycling method capable of obtaining excellent cycle performance in an environment with a low evaporation temperature using a working medium having a low global warming potential.

BRIEF DESCRIPTION OF DRAWINGS

Fig. 1 is a schematic configuration diagram showing an example of a refrigeration cycle device.

Fig. 2 is a cycle diagram showing a state change of a working medium in a refrigeration cycle device on a pressure-enthalpy diagram.

Fig. 3A is a diagram showing a saturated liquid pressure and a saturated vapor pressure in an example of a single fluid and an azeotropic mixed fluid on a pressure-enthalpy diagram.

Fig. 3B is a diagram showing a saturated liquid pressure and a saturated vapor pressure in an example of a non-azeotropic mixed fluid on a pressure-enthalpy diagram.

DESCRIPTION OF EMBODIMENTS

In the disclosure, a numerical range expressed using "to" means a range including the numerical values stated before and after "to" as the minimum value and the maximum value, respectively.

In a numerical range described stepwise in the disclosure, an upper limit value or a lower limit value described in a certain numerical range may be replaced with an upper limit value or a lower limit value of another numerical range described stepwise. In addition, in a numerical range indicated in the disclosure, an upper limit value or a lower limit value described in a certain numerical range may be replaced with a value shown in the examples.

In the disclosure, a combination of two or more preferable aspects is a more preferable aspect.

In the disclosure, in a case in which a plurality of substances corresponding to each component are present, the amount of each component means a total amount of the plurality of substances unless otherwise specified.

In the disclosure, a pressure refers to an absolute pressure and is 0.101 MPa at atmospheric pressure.

In the disclosure, a saturated vapor pressure means a pressure of a saturated vapor, and means the pressure at an intersection of an isothermal line and a saturated vapor line in a pressure-enthalpy diagram.

In the disclosure, a saturated liquid pressure means a pressure of a saturated liquid, and means the pressure at an intersection of an isothermal line and a saturated liquid line in a pressure-enthalpy diagram.

[Thermal Cycling System]

A thermal cycling system of the disclosure includes a working medium, a compressor that compresses a vapor of the working medium, a condenser that cools and liquefies the vapor of the working medium discharged from the compressor, a pressure reducing device that reduces a pressure of the working medium discharged from the condenser, and an evaporator that heats the working medium discharged from the pressure reducing device.

The working medium includes trifluoroethylene (HFO-1123) and 2,3,3,3-tetrafluoropropene (HFO-1234yf), a content of the HFO-1123 is from 31.5 to 42.0 mass% with respect to a total content of the HFO-1123 and the HFO-1234yf, the total content of the HFO-1123 and the HFO-1234yf is 99.0 mass% or more with respect to a total amount of the working medium, and the evaporator is controlled such that an evaporation temperature of the working medium is -40°C or higher.

According to the thermal cycling system of the disclosure, excellent cycle performance can be obtained under an environment with a low evaporation temperature using a working medium with a low global warming potential (GWP).

HFO-1123 has a very low GWP, but has a low boiling point of -61.239°C, so that it is necessary to modify a pressure-resistant design of a device. In addition, HFO-1234yf has a very low GWP, but has a relatively high boiling point of -29.485°C, so that in a usage environment where an operation at a low evaporation temperature is required, a low pressure side of a device will fall to equal to or lower than a boiling point, resulting in a negative pressure operation. This lowers the suction of a working medium into the compressor, and the cycle performance and the device reliability tend to decrease.

In response thereto, the present inventors have found that when HFO-1123 and HFO-1234yf which have a very low GWP are mixed at a specific ratio and a total content of the HFO-1123 and the HFO-1234yf is set to a specific proportion or more, excellent cycle performance can be obtained in an environment with a low evaporation temperature.

Patent Document 1 and Patent Document 2 do not describe a thermal cycling system using a working medium including HFO-1123 and HFO-1234yf.

A thermal cycling system to which a working medium is applied may be a heat pump device using heat obtained in a condenser, or may be a refrigeration cycle device using cooling energy obtained in an evaporator. The thermal cycling system of the disclosure may be a direct expansion type or an indirect expansion type. Examples of the indirect expansion type include flooded evaporator types.

The thermal cycle includes a series of cycles in which (1) a working medium is compressed by a compressor in a gaseous state, (2) and is cooled by a condenser to be changed to a liquid state with a high pressure, (3) the pressure is lowered by an expansion valve which is an example of a pressure reducing device, and (4) the working medium is vaporized at a low temperature in an evaporator to absorb heat by the heat of vaporization. The compressor can be classified into turbo (centrifugal type), reciprocating, rotary, twin-screw, single-screw, and scroll compressors, depending on a method of compressing a working medium in a gaseous state, and can be selected according to a heat capacity, a compression ratio, and a size.

<Working medium>

The working medium used in the thermal cycling system of the disclosure includes HFO-1123 and HFO-1234yf.

In the disclosure, the working medium means a fluid that carries heat, and is a concept including a refrigerant composition and a heat medium composition. The refrigerant composition is a medium mainly responsible for cooling a heat source, but may be used as a medium responsible for heating at the same time. The heat medium composition is a medium mainly responsible for heating, but may be used as a medium responsible for cooling a heat source at the same time.

The working medium is preferably for thermal cycling. Specifically, the working medium is preferably used in a thermal cycling system in which a series of changes such as applying a state change using heat absorption and heat dissipation and returning to an initial state is generated.

Other components other than the HFO-1123 and the HFO-1234yf may affect the GWP of the working medium. Therefore, a content of other components is preferably small.

From the above viewpoint, in the working medium, the total content of the HFO-1123 and the HFO-1234yf is 99.0 mass% or more, and preferably 99.5 mass% or more, with respect to the total amount of the working medium. An upper limit value of the total content of the HFO-1123 and the HFO-1234yf is not particularly limited, and may be 100 mass%.

Hereinafter, each component included in the working medium will be described in detail.

(HFO-1123)

The content of the HFO-1123 is from 31.5 to 42.0 mass% with respect to the total content of the HFO-1123 and the HFO-1234yf. When the content of the HFO-1123 is 31.5 mass% or more, the saturated vapor pressure at -40°C is 0.0890 MPa or more. When the content of the HFO-1123 is 42.0 mass% or less, the saturated liquid pressure of the working medium at 60°C is lower than the saturated liquid pressure of R404A at 60°C. Specifically, the saturated liquid pressure at 60°C is 2.884 or less. When the content of the HFO-1123 is 42.0 mass% or less, a critical temperature is 79.4°C or higher, and a specific heat ratio is 1.1160 or less.

From the viewpoint of further improving the saturated vapor pressure at -40°C, the content of the HFO-1123 is preferably 34.5 mass% or more, and more preferably 40.5 mass% or more. When the content of the HFO-1123 is 34.5 mass% or more, the saturated vapor pressure at -40°C is 0.0925 MPa or more. When the content of the HFO-1123 is 40.5 mass% or more, the saturated vapor pressure at -40°C is 0.0995 MPa or more.

The content of the HFO-1123 is preferably 39.0 mass% or less, from the viewpoint of further decreasing the saturated liquid pressure at 60°C, further improving the critical temperature, and further decreasing the specific heat ratio.

From the above viewpoint, the content of the HFO-1123 is preferably from 34.5 to 42.0 mass%, and more preferably from 34.5 to 39.0 mass% with respect to the total content of the HFO-1123 and the HFO-1234yf. In addition, the content of the HFO-1123 is preferably from 40.5 to 42.0 mass% with respect to the total content of the HFO-1123 and the HFO-1234yf.

When the content of the HFO-1123 is from 34.5 to 39.0 mass%, the critical temperature is high. Therefore, it is suitable for electric vehicle applications and the like in which operation at a high condensation temperature is required.

When the content of the HFO-1123 is from 40.5 to 42.0 mass%, the saturated vapor pressure is high. Therefore, it is suitable for low-temperature applications such as freezing and refrigeration in which operation at a low evaporation temperature is required.

(HFO-1234yf)

In the working medium, the content of the HFO-1234yf is not particularly limited, and is appropriately adjusted so that the content of the HFO-1123 is from 31.5 to 42.0 mass% and the total content of the HFO-1123 and the HFO-1234yf is 99.0 mass% or more.

In addition to the HFO-1123 and the HFO-1234yf, the working medium may contain a compound usually used for the working medium as an optional component. Examples of the optional component include HFO, HCFO, HFC, other halogenated compounds, and hydrocarbons, other than HFO-1123 and HFO-1234yf. The optional component may be only one kind or two or more kinds.

In the disclosure, the "halogenated compound" means an organic compound having a halogen atom.

Examples of the HFO which is an optional component include (Z)-1,3,3,3-tetrafluoropropene (HFO-1234ze(Z)), 1,1-difluoroethylene (HFO-1132a), (Z)-1,2-difluoroethylene (HFO-1132(Z)), (E)-1,2-difluoroethylene (HFO-1132(E)), 2-fluoropropene (HFO-1261yf), 1,1,2-trifluoropropene (HFO-1243yc), 1,2,3,3,3-pentafluoropropene (HFO-1225ye), 3,3,3-trifluoropropene (HFO-1243zf), (E)-1,3,3,3-tetrafluoropropene (HFO-1234ze(E)), (Z)-1,1,1,4,4,4-hexafluorobutene (HFO-1336mzz(Z)), and (E)-1,1,1,4,4,4-hexafluorobutene (HFO-1336mzz(E)).

Examples of the HCFO which is an optional component include (E)1-chloro-2,3,3,3-tetrafluoropropene (HCFO-1224yd(E)), 2-chloro-1,1,3,3-tetrafluoropropene (HCFO-1224xc), 2-chloro-1,3,3,3-tetrafluoropropene (HCFO-1224xe), 1-chloro-2,2-difluoroethylene (HCFO-1122), 1-chloro-1,2-difluoroethylene (HCFO-1122a), (E)-1-chloro-3,3,3-trifluoropropene (HCFO-1233zd(E)), (Z)-1-chloro-3,3,3-trifluoropropene (HCFO-1233zd(Z)), 2-chloro-1,1,3-trifluoropropene (HCFO-1233xc), and 2-chloro-3,3,3-trifluoropropene (HCFO-1233xf).

Examples of the HFC which is an optional component include fluoroethane (HFC-161), 1,1-difluoroethane (HFC-152a), 1,1,1-trifluoroethane (HFC-143a), pentafluoropropane, hexafluoropropane, pentafluorobutane, and heptafluorocyclopentane.

Examples of optional components other than HFO, HCFO, and HFC include iodine or bromine containing halogenated compounds such as monoiodomethane ($CH_3I$), diiodomethane ($CH_2I_2$), dibromomethane ($CH_2Br_2$), bromomethane ($CH_3Br$), dichloromethane ($CH_2Cl_2$), chloroiodomethane ($CH_2CII$), dibromochloromethane ($CHBr_2Cl$), tetra-iodomethane ($CI_4$), carbon tetrabromide ($CBr_4$), bromotrichloromethane ($CBrCl_3$), dibromodichloromethane ($CBr_2Cl_2$), tribromofluoromethane ($CBr_3F$), fluorodiiodomethane ($CHFI_2$), difluoroiodomethane ($CHF_2I$), difluorodiiodomethane ($CF_2I_2$), dibromodifluoromethane ($CBr_2F_2$), trifluoroiodomethane ($CF_3I$), 1,1,1-trifluoro-2-iodoethane ($CF_3CH_2I$); hydro-carbons such as cyclopropane, butane, isobutane, pentane, and isopentane; and chlorofluoroolefins (CFO) such as 1,1-dichloro-2,3,3,3-tetrafluoropropene (CFO-1214ya), 1,3-dichloro-1,2,3,3-tetrafluoropropene (CFO-1214yb), and 1,2-dichloro-1,2-difluoroethylene (CFO-1112).

In a case in which the working medium of the disclosure contains an optional component, the content of the optional component is 1.0 mass% or less, particularly preferably 0.5 mass% or less, and may be 0 mass% with respect to the total amount of the working medium.

The content of water in the working medium is preferably 20 ppm by mass or less, and particularly preferably 15 ppm by mass or less with respect to the total amount of the working medium, as a moisture content measured by Karl Fischer coulometric titration method. When the content of water is 20 ppm by mass or less, freezing in a capillary tube which is an example of a pressure reducing device of a thermal cycling system, hydrolysis of a working medium or refrigerating machine oil, material deterioration due to an acid component generated in the device, occurrence of contamination, and the like are suppressed.

A content of air in a gas phase portion of the working medium at 25°C is preferably less than 15000 ppm by volume and particularly preferably 8000 ppm by volume or less as an air concentration measured by a gas chromatogram. When the content of air is less than 15000 ppm by volume, defective heat transfer in the condenser and the evaporator and an increase in operating pressure are suppressed. In particular, decomposition of the working medium or the refrigerating machine oil due to reaction with oxygen in the air is suppressed.

The working medium may contain, for example, inevitable components such as impurities produced as by-products during production of specific components and the like and solvents used during production. From the viewpoint of securing stability, the total content of these inevitable components is preferably 1.0 mass% or less, more preferably 0.5 mass% or less, and still more preferably 0.1 mass% or less with respect to the total amount of the working medium. From the viewpoint of simplifying a purification step in the production of specific components and the like, a total content of the inevitable components may be 50.0 ppm by mass or more, or may be 100.0 ppm by mass or more.

Examples of the inevitable components include hydrogen fluoride, methane, chloromethane, dichlorodifluoromethane (CFC-12), 1,1,2-trichloro-1,2,2-trifluoroethane (CFC-113), chlorodifluoromethane (HCFC-22), chlorofluoromethane (HCFC-31), dichlorotrifluoroethane (HCFC-123), 1,2-dichloro-1,1,2-trifluoroethane (HCFC-123a), 1-chloro-1,2,2,2-tetrafluoroethane (HCFC-124), 1-chloro-1,1,2,2-tetrafluoroethane (HCFC-124a), chlorotrifluoroethane (HCFC-133), 2-chloro-1,1,1-trifluoroethane (HCFC-133a), 1-chloro-1,1,2-trifluoroethane (HCFC-133b), 2-chloro-1,1-difluoroethane (HCFC-142), 1-chloro-1,1-difluoroethane (HCFC-142b), trifluoromethane (HFC-23), difluoromethane (HFC-32), fluoromethane (HFC-41), pentafluoroethane (HFC-125), 1,1,2,2-tetrafluoroethane (HFC-134), 1,1,1,2-tetrafluoroethane (HFC-134a), 1,1,2-trifluoroethane (HFC-143), 1,1,1-trifluoroethane (HFC-143a), 1,1-difluoroethane (HFC-152a), 1,1,1,2,2,3,3-heptafluoropropane (HFC-227ca), 1,1,1,2,3,3,3-heptafluoropropane (HFC-227ea), 1,1,1,3,3,3-hexafluoropropane (HFC-236fa), 1,1,1,2,3,3-hexafluoropropane (HFC-236ea), 1,1-difluoroethylene (HFO-1132a), (E)-1,2-difluoroethylene (HFO-1132(E)), (Z)-1,2-difluoroethylene (HFO-1132(Z)), fluoroethylene (HFO-1141), 1,1,3,3,3-pentafluoropropene (HFO-1225zc), (E)-1,3,3,3-tetrafluoropropene (HFO-1234ze(E)), (Z)-1,3,3,3-tetrafluoropropene (HFO-1234ze(Z)), 3,3,3-trifluoropropene (HFO-1243zf), 3,3-difluoropropene (HFO-1252zf), 1-chloro-2,2-difluoroethylene (HCFO-1122), (E)-1-chloro-1,2-difluoroethylene, (Z)-1-chloro-1,2-difluoroethylene, (E)-1-chloro-2-fluoroethylene (HCFO-1131(E)), (Z)-1-chloro-2-fluoroethylene (HCFO-1131(Z)), (E)-1,2-dichloro-1,2-difluoroethylene (CFO-1112(E)), (Z)-1,2-dichloro-1,2-difluoroethylene (CFO-1112(Z)), chlorotrifluoroethylene (CFO-1113), tetrafluoroethylene (FO-1114), hexafluoropropene (FO-1216), and perfluorocyclobutane.

<Cycle Performance>

Cycle performance which is a property required when applying a working medium to a thermal cycling system, can be evaluated in terms of coefficient of performance (in the disclosure, also referred to as "COP") and capacity per unit volume (in the disclosure, also referred to as "CAP"). In a case in which the thermal cycling system is a refrigeration cycling system, the capacity is a refrigeration capacity. Evaluation items in a case in which the working medium is applied to the refrigeration cycling system further include a refrigeration effect, a temperature glide in the evaporator and the condenser, a discharge temperature, a condensation pressure, and an evaporation pressure, in addition to the above cycle performance. Specifically, for example, each item is calculated by a method described later using a reference refrigeration cycle under a temperature condition described below. The temperature glide and the discharge temperature in the evaporator and the condenser are absolute values, and the refrigeration effect, CAP, COP, condensation pressure, and evaporation pressure are evaluated in terms of relative values based on the value of R404A.

(Refrigeration Cycling System)

As an example of the thermal cycling system, a refrigeration cycling system will be described.

The refrigeration cycling system is a system in which a working medium removes heat energy from a load fluid in an evaporator to cool the load fluid to a lower temperature.

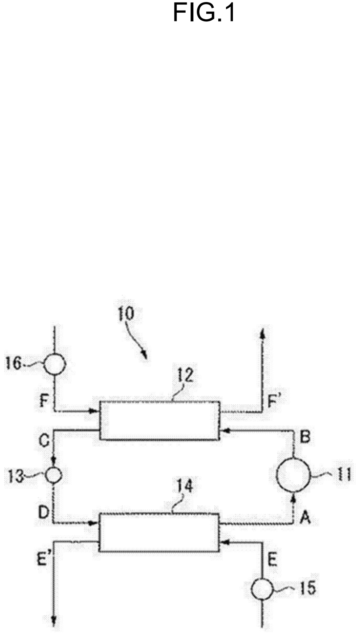

Fig. 1 is a schematic configuration diagram showing an example of a refrigeration cycling system of the disclosure. The refrigeration cycling system 10 is a system that is roughly configured to include a compressor 11 that compresses a working medium vapor A into a working medium vapor B having a high temperature and high pressure, a condenser 12 that cools the working medium vapor B discharged from the compressor 11 and liquefies the working medium vapor B into a working medium C having a low temperature and high pressure, an expansion valve 13 that expands the working medium C discharged from the condenser 12 to form a working medium D having a low temperature and low pressure, an evaporator 14 that heats the working medium D discharged from the expansion valve 13 to form a working medium vapor A having a high temperature and low pressure, a pump 15 that supplies a load fluid E to the evaporator 14, and a pump 16 that supplies a fluid F to the condenser 12.

In the refrigeration cycling system 10, the following cycles (i) to (iv) are repeated.

(i) The working medium vapor A discharged from the evaporator 14 is compressed by the compressor 11 into the working medium vapor B having a high temperature and high pressure (hereinafter, referred to as an "AB process").

(ii) The working medium vapor B discharged from the compressor 11 is cooled by the fluid F in the condenser 12 and liquefied to obtain the working medium C having a low temperature and high pressure. In this case, the fluid F is heated to become a fluid F', and is discharged from the condenser 12 (hereinafter, referred to as a "BC process").

(iii) The working medium C discharged from the condenser 12 is expanded by the expansion valve 13 to become a working medium D having a low temperature and low pressure (hereinafter, referred to as a "CD process").

(iv) The working medium D discharged from the expansion valve 13 is heated by a load fluid E in the evaporator 14 to obtain the working medium vapor A having a high temperature and low pressure. In this case, the load fluid E is cooled to become a load fluid E', and is discharged from the evaporator 14 (hereinafter, referred to as a "DA process").

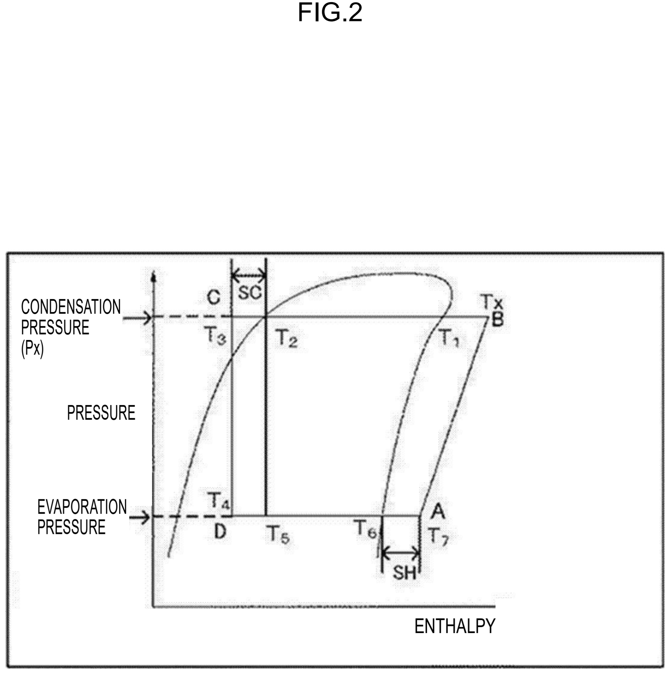

The refrigeration cycling system 10 is a cycling system including an adiabatic/isentropic change, an isenthalpic change, and an isobaric change. The state change of the working medium can be described on the pressure-enthalpy line (curve) diagram shown in Fig. 2 using A, B, C, and D as vertices.

The AB process is a process in which adiabatic compression is performed in the compressor 11 to convert the working medium vapor A having a low temperature and low pressure into the working medium vapor B having a high temperature and high pressure, and is indicated by an AB line in Fig. 2. As described later, the working medium vapor A is introduced into the compressor 11 in a superheated state, and the obtained working medium vapor B is also the vapor in the superheated state. The compressor suction gas density is the density ($\rho$s) in the state of A in Fig. 2. The compressor discharge gas temperature (discharge temperature) is the temperature (Tx) in the state of B in Fig. 2, and is the maximum temperature in the refrigeration cycle. The compressor discharge pressure (discharge pressure) is the pressure (Px) in the state of B in Fig. 2, and is the maximum pressure in the refrigeration cycle. Since the BC process is isobaric cooling, the discharge pressure shows the same value as the condensation pressure (Pc). Therefore, in Fig. 2, the condensation pressure is indicated as Px for convenience.

The BC process is a process in which constant pressure cooling is performed in the condenser 12 to turn the working medium vapor B having a high temperature and high pressure into the working medium C having a low temperature and high pressure, and is indicated by a BC line in Fig. 2. In this case, the pressure is the condensation pressure. Among intersections of the pressure-enthalpy line and the BC line, an intersection T1 on the high enthalpy side is a condensation temperature, and an intersection T2 on the low enthalpy side is a condensation boiling point temperature. Here, the temperature gradient in the condenser in a case in which the working medium is a non-azeotropic mixed fluid is indicated as a difference between T1 and T2.

In the BC process, the condensation temperature is preferably 75°C or lower, more preferably 70°C or lower, and still more preferably 66°C or lower. This is because the condensation temperature is preferably equal to or lower than the critical temperature of the working medium. The critical temperature is a temperature at an end point on the high pressure and high temperature side of the saturated liquid line and the saturated vapor line. At the critical temperature or higher, there is no evaporation phenomenon or liquefaction phenomenon, there is no distinction between the liquid phase and the gas phase, and there is no phase change. When the temperature of the working medium is lower than or equal to the critical temperature, the working medium can be liquefied (condensed), and the refrigeration performance can be maintained.

In the disclosure, the critical temperature of the working medium is preferably 79.4°C or higher, and more preferably 80.4°C or higher.

The CD process is a process in which isoenthalpic expansion is performed by the expansion valve 13 to change the working medium C having a low temperature and high pressure into the working medium D having a low temperature and low pressure, and is indicated by a CD line in Fig. 2. When the temperature of the working medium C at a low temperature and high pressure is represented by T3, T2 - T3 is the degree of subcooling (SC) of the working medium in the cycles of (i) to (iv).

The DA process is a process in which constant pressure heating is performed in the evaporator 14 to return the working medium D having a low temperature and low-pressure to the working medium vapor A having a high temperature and low pressure, and is indicated by a DA line in Fig. 2. In this case, the pressure is the evaporation pressure. Among intersections of the pressure-enthalpy line and the DA line, an intersection point T6 on the high enthalpy side is an evaporation temperature. The temperature gradient in the evaporator in a case in which the working medium is a non-azeotropic mixed fluid is indicated as a difference between T6 and T4. When the temperature of the working medium vapor A is represented by T7, T7 - T6 is the degree of superheating (SH) of the working medium in the cycles (i) to (iv). T4 represents the temperature of the working medium D.

CAP and COP of the working medium are obtained from the following formulas (11), (12), (13), and (14), respectively, by using enthalpies, hA, hB, hC, and hD, and the working medium mass circulation amount qmr in each state of A (after evaporation, low temperature and low pressure), B (after compression, high temperature and high pressure), C (after condensation, low temperature and high pressure), and D (after expansion, low temperature and low pressure) of the working medium. It is assumed that there is no pressure loss in the piping or the heat exchanger.

In a case in which the loss work of the compressor is applied as heat to the working medium, using the compressor efficiency η, the working medium vapor B' after the AB process is expressed by the following equation using hA, hB, and η.

$$hB' = hA + (hB - hA)/\eta$$

The cycle performance of the working medium is obtained by performing a refrigeration cycle theoretical calculation of the working medium under a temperature condition of a reference refrigeration cycle to be described later using National Institute of Science and Technology (NIST) Reference Fluid Thermodynamic and Transport Properties Database (REFPROP 10.0).

The physical property data and mixing rule of the HFO-1123 were obtained using the values described in Akasaka, R., Higashi, Y., Sakoda, N., Fukuda, S., and Lemmon, E.W., Thermodynamic properties of trifluoroethene (R1123): (p, ρ, T) behavior and fundamental equation of state, International Journal of Refrigeration., 2020, 119, 457-467, Akasaka, R., and Lemmon, E.W., A New Fundamental Equation of State for R1123 and its Applications to Mixture Models for Mixtures with R32 and R1234yf", The 6th IIR Conference on Thermophysical Properties and Transfer Processes of Refrigerants, 2021.

$$CAP = (hA - hD) \times \rho s = wr \times \rho s... \quad (11)$$

$$COP = Q/P = qmr(hA - hD)/qmr(hB - hA)=(hA - hD)/(hB - hA)... \quad (12)$$

$$Q = qmr(hA - hD)... \quad (13)$$

$$P = qmr(hB - hA)... \quad (14)$$

In consideration of the compressor efficiency, COP and P are expressed by the following equations.

$$COP = Q/P = (hA - hD)/(hB' - hA)... \quad (15)$$

$$P = qmr(hB' - hA)... \quad (16)$$

<Temperature Glide>

The temperature glide is an index for measuring the difference in composition between the liquid phase and the gas phase in the working medium of the mixture. The temperature glide is defined as the property that a start temperature and a completion temperature are different in the heat exchanger, for example, during the evaporation in an evaporator or the condensation in a condenser. In the disclosure, a property that a start temperature and a completion temperature of evaporation in an evaporator are different is referred to as an "evaporation glide". In addition, a property that a start temperature and a completion temperature of condensation in a condenser are different is referred to as a "condensation glide". The evaporation glide and the condensation glide are collectively referred to as a "temperature glide".

In an azeotropic mixed fluid, the temperature glide is 0°C, and in a pseudo azeotropic mixed fluid such as R410A, the temperature glide is extremely close to 0, for example, 0.3°C or lower.

When the temperature glide is large, for example, an inlet temperature in the evaporator decreases, so that the possibility of frosting increases, which is a problem. In the thermal cycling system, in order to improve the heat exchange efficiency, it is common to make the working medium flowing through the heat exchanger and the heat source fluid such as water or air counter flow, and since the temperature difference of the heat source fluid is small in the stable operation state, it is difficult to obtain a thermal cycling system with a good energy efficiency, in the case of a non-azeotropic mixed fluid having a large temperature glide. Therefore, in a case in which the mixture is used as a working medium, a working medium having an appropriate temperature glide is desired.

<Refrigeration Effect (wr)>

A refrigeration effect is the amount of heat (kJ/kg) per unit weight absorbed by the working medium in the evaporator in the refrigeration cycling system. A value obtained by multiplying wr by the working medium mass circulation rate is a refrigeration capacity Q. In the disclosure, the refrigeration effect (wr) is evaluated by conversion into a relative value based on the value of R404A.

<Global Warming Potential (GWP)>

In the disclosure, the GWP is a 100-year value of the Intergovernmental Panel on Climatic Change (IPCC) Sixth Assessment Report (AR6) unless otherwise specified.
The GWP in the mixture is a weighted average based on the composition mass. In consideration of the GWP in the mixture, the GWP of 1 or less is calculated as 1.

<Amount of Heat of Combustion>

The amount of heat of combustion (MJ/kg) per mass is defined as an index for determining the flammability of a refrigerant by the American Society of Heating, Refrigeration and Air-conditioning Engineers (ASHRAE) standard 34. In this standard, a substance having a calorific value of 19.000 MJ/kg or more is defined as one of indices of a refrigerant having "high flammability".
The amount of heat of combustion is represented by a difference between the sum of enthalpies of formation of products on a product side in a combustion reaction formula and enthalpies of formation of compounds on a reactant side.
The enthalpy of formation is described in a chemical handbook, an international standard (see Reference A), various handbooks, and the like.
The enthalpy of formation for a novel compound can be determined by Benson's group additivity rule (see Reference B) or a computational chemical method.
The concept of the combustion reaction formula of a compound containing a halogen is defined in the international standard (See References A and C).
Reference A: ANSI/ASHRAE Standard 34 (2016), Designation and Safety Classification of Refrigerants.
Reference B: S. Benson, Thermo chemical kinetics, 2nd Ed., Wiley Interscience, New York (1976).
Reference C: ISO 817 (2014), Refrigerant: Designation and Safety Classification.
In this standard, the heat of combustion is positive for an exothermic reaction.
In the disclosure, the amount of heat of combustion of the working medium is a theoretical value calculated under the following assumption, where a value of the amount of heat of combustion obtained by stoichiometrically completely combusting one mole of the working medium with oxygen is converted into a value of the amount of heat of combustion per 1 kg of the working medium.
It is assumed that the compounds on a product side and a reactant side are gases.
The combustion products are HF(g), $CO_2$(g), $COF_2$(g), and $H_2O$(g). In a case in which nitrogen or iodine is a part of a molecular structure of a substance, $N_2$(g) or $I_2$(g) is added as a combustion product.
In a case in which the amount of heat of combustion of the working medium is obtained, each compound contained in the working medium is decomposed into atoms constituting each compound, and a virtual substance containing each atom is set in consideration of the molar ratio in the working medium. The amount of heat of combustion is calculated using a combustion reaction equation of the virtual substance. $C_qH_rF_s$ in the following equation corresponds to the virtual substance.
For example, the combustion reaction equation is defined by the magnitude of the number of H atoms (r) and the number of F atoms (s) in the substance, and the following equation is used as the combustion reaction equation in a case in which the number of H atoms (r) ≥ the number of F atoms (s).

[Equation 1]

$$C_qH_rF_s + \left(q + \frac{r-s}{4}\right)O_2 = sHF + qCO_2 + \frac{r-s}{2}H_2O \qquad (r \geq s)$$

As the combustion reaction equation in the case of the number of H atoms (r) < the number of F atoms (s), the following equation is used.

[Equation 2]

$$C_qH_rF_s + \left(q - \frac{s-r}{4}\right)O_2 = rHF + \frac{s-r}{2}COF_2 + \left(q - \frac{s-r}{2}\right)CO_2 \qquad (r < s)$$

<Specific Heat Ratio>

The specific heat ratio is represented by a ratio (Cp/Cv) between constant pressure specific heat (Cp) of a gas and constant volume specific heat (Cv) of a gas. The constant pressure specific heat and the constant volume specific heat are values under standard conditions of 25°C and atmospheric pressure (0.101 MPa), and are calculated by National Institute of Science and Technology (NIST) Reference Fluid Thermodynamic and Transport Properties Database (REFPROP 10.0).

The specific heat ratio of the working medium is preferably 1.1160 or less, and more preferably 1.1147 or less. The specific heat ratio is preferably as low as possible, and may be 1.1000 or more or 1.1100 or more.

<Saturated Vapor Pressure>

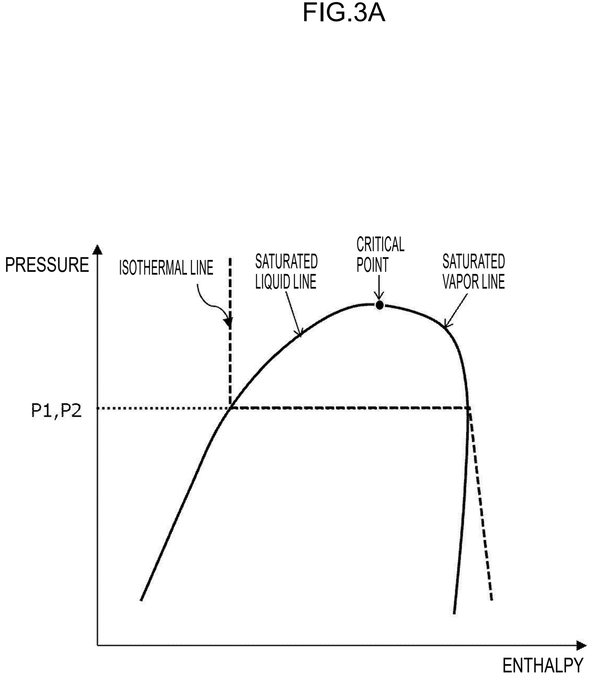

Fig. 3A is a diagram showing a saturated liquid pressure and a saturated vapor pressure in an example of a single fluid and an azeotropic mixed fluid on a pressure-enthalpy diagram.

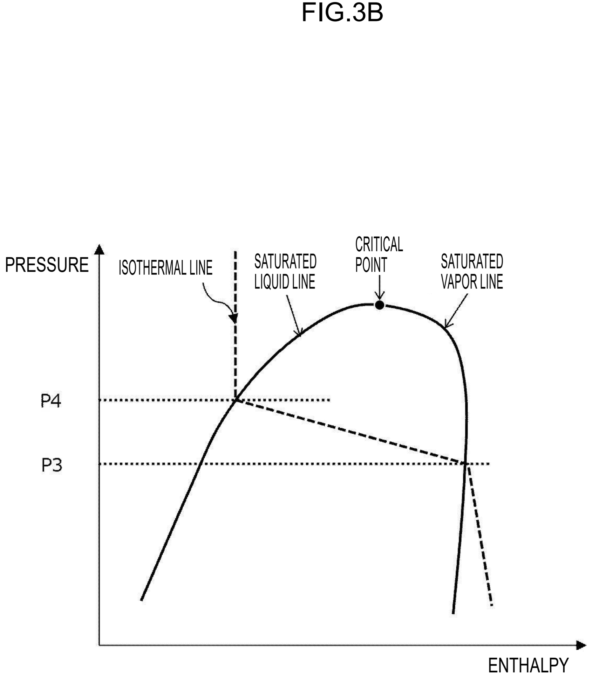

Fig. 3B is a diagram showing a saturated liquid pressure and a saturated vapor pressure in an example of a non-azeotropic mixed fluid on a pressure-enthalpy diagram.

As shown in Fig. 3A, in a case in which the working medium is a single fluid or an azeotropic mixed fluid, the saturated vapor pressure P1 and the saturated liquid pressure P2 at the same temperature indicated by the isothermal line are substantially the same. As shown in Fig. 3B, in a case in which the working medium is a non-azeotropic mixed fluid, the saturated vapor pressure P3 and the saturated liquid pressure P4 at the same temperature indicated by the isothermal line are different, and the saturated vapor pressure P3 has a value lower than the saturated liquid pressure P4.

The saturated vapor pressure of the working medium is preferably 0.0890 MPa or more, more preferably 0.0925 MPa or more, and still more preferably 0.0995 MPa or more, in the operating temperature range in the thermal cycling system.

From the viewpoint of setting the saturated vapor pressure to 0.0890 MPa or more, the evaporation temperature is preferably -40°C or higher.

<Saturated Liquid Pressure>

In a case in which the working medium is a single fluid or an azeotropic mixed fluid, the saturated liquid pressure and the saturated vapor pressure at the same temperature are substantially the same. Meanwhile, in a case in which the working medium is a non-azeotropic mixed fluid, the saturated liquid pressure and the saturated vapor pressure at the same temperature are different, and the saturated liquid pressure has a value higher than the saturated vapor pressure.

The saturated liquid pressure of the working medium is preferably 2.884 MPa or less, and more preferably 2.800 MPa or less, in the operating temperature range in the thermal cycling system.

An evaporation temperature of the working medium is controlled to -40°C or higher, for example, and the working medium is used in a refrigeration cycle device.

The evaporator is preferably operated at an evaporation temperature of the working medium of from -40°C to 10°C. The evaporation temperature of the working medium in the evaporator may be automatically controlled.

In the disclosure, the evaporation temperature means a temperature at which the working medium absorbs heat and turns into a vapor in the evaporation process of the thermal cycling system.

In the disclosure, the condensation temperature means a temperature at which a vapor of a working medium releases heat and becomes a liquid in a condensation step of the thermal cycling system.

The evaporation temperature can be determined by measuring a temperature at the evaporator inlet and/or at the evaporator outlet. In the case of a single fluid and an azeotropic mixed fluid, the evaporation temperature is constant. However, in the case of a non-azeotropic mixed fluid, the evaporation temperature is an average temperature of the evaporation start temperature and the evaporation completion temperature, and therefore, is calculated as "evaporation temperature = (evaporation start temperature + evaporation completion temperature)/2".

The condensation temperature can also be determined by measuring the temperature at the condenser inlet and/or at the condenser outlet. In the case of a single fluid and an azeotropic mixed fluid, the condensation temperature is constant. However, in the case of a non-azeotropic mixed fluid, the condensation temperature is an average temperature of the condensation start temperature and the condensation completion temperature, and therefore, is calculated as "condensation temperature = (condensation start temperature + condensation completion temperature)/2".

A thermal cycling system may be a heat pump system using heat obtained in a condenser, or may be a refrigeration cycling system using cooling energy obtained in the evaporator.

Specific examples of the heat cycle system include chilling and freezing equipment, air-conditioning equipment, heating and hot water equipment, an electric power generation systems, a heat transport apparatus, and a secondary cooling machine. In particular, the heat cycle system can stably and safely exert heat cycle performance even in a higher-temperature working environment, and therefore is preferably used as air-conditioning equipment often installed outdoors. The heat cycle system is also preferably used as chilling and freezing equipment.

Specific examples of the air conditioner include a room air conditioner, a packaged air conditioner (such as a packaged air conditioner for stores, a packaged air conditioner for buildings, and a packaged air conditioner for facilities), a gas engine heat pump, a train air conditioner, and an air conditioner for a vehicle.

Examples of the air conditioner for a vehicle include an air conditioner for a gasoline vehicle, an air conditioner for a hybrid vehicle, an air conditioner for an electric vehicle, and an air conditioner for a hydrogen vehicle.

Specific examples of the chilling and freezing equipment include a refrigerated display (a refrigeration showcase, a freezing showcase, or the like), a refrigerator, a freezer, a water cooling equipment, a chilling and freezing unit, a freezing machine for water chilling equipment warehouses, a chiller (chilling unit), a turbo freezing machine, a screw freezing machine, an automatic vending machine, and an ice-making machine.

Specific examples of the heating and hot water equipment include a heat pump hot water machine, a heat pump warm water heater, a heat pump warm air heater, a vapor/hot air generation heat pump, and an exhaust heat recovery heat pump.

The electric power generation systems is preferably an electric power generation systems with a Rankine cycle system. Specific examples of the electric power generation systems include a system in which the working medium is heated by, for example, geothermal energy, solar heat, or waste heat in a medium to high temperature range of from about 50°C to 200°C in the evaporator, the working medium formed into vapor in a high-temperature and high-pressure state is adiabatically expanded in an expansion machine, and the work generated by such adiabatic expansion is allowed to drive an electric power generation systems machine, to perform electric power generation.

The heat transport apparatus is preferably a latent heat transport apparatus. Examples of the latent heat transport apparatus include a heat pipe and a two-phase closed-type thermosyphon apparatus, in which latent heat transport is performed by use of a phenomenon of evaporation, boiling, condensation, and the like of the working medium enclosed in the apparatus. The heat pipe is applied to a relatively small cooling apparatus such as a cooling apparatus of a heat generation portion of a semiconductor device or electronic equipment. The two-phase closed-type thermosyphon apparatus does not require any wig and is simple in terms of structure, and therefore is widely utilized for a gas-gas type heat exchanger, promotion of snow melting, freeze proofing, and the like on the load, and the like.

According to the thermal cycling system of the disclosure, since the refrigeration effect tends to be 1.078 or more, the COP tends to be 1.024 or more, and the CAP tends to be 0.805 or more as relative values based on R404A, the working medium used in the thermal cycling system of the disclosure can serve as a substitute for R404A.

In addition, according to the thermal cycling system of the disclosure, since the refrigeration effect tends to be 1.075 or more, the COP tends to be 0.966 or more, and the CAP tends to be 1.472 or more as relative values based on the HFO-1234yf, the working medium used in the thermal cycling system of the disclosure can serve as a substitute for the HFO-1234yf.

[Thermal Cycling Method]

A thermal cycling method of the disclosure is a method of compressing a vapor of a working medium, cooling and liquefying a vapor of the working medium discharged from a compressor, reducing the pressure of the liquefied working medium, and heating the pressure-reduced working medium at an evaporation temperature of -40°C or higher.

The working medium used in the thermal cycling method of the disclosure is similar to the working medium used in the thermal cycling system of the disclosure.

In the thermal cycling method of the disclosure, the pressure-reduced working medium is preferably heated at an evaporation temperature of from -40°C to 10°C.

Examples

Hereinafter, the disclosure will be described more specifically with reference to examples, but the disclosure is not limited to the following examples, as long as it does not depart from the gist of the disclosure. Examples 1A, 2A, 3A, 4A, and 4B are Reference Examples, Examples 1-2 to 1-13, Examples 2-2 to 2-13, Examples 3-2 to 3-13, and Examples 4-2 to 4-13 are Examples, and Examples 1-1, 1-14, 1-15, Examples 2-1, 2-14, 2-15, Examples 3-1, 3-14, 3-15, and Examples 4-1, 4-14, 4-15 are Comparative Examples. In the table, "-" means that the component is not contained.

The working medium including HFO-1123 and HFO-1234yf having the composition (mass%) shown in Table 1 was evaluated.

For the working medium, the saturated vapor pressure at -40°C, the saturated liquid pressure at 60°C, the critical temperature, and the specific heat ratio were calculated. In addition, the global warming potential (in the table, described as "GWP") was calculated.

A calculation method is as described above. The GWP is a 100-year value of the Intergovernmental Panel (IPCC)

**EP 4 722 612 A1**

Sixth Assessment Report (AR6).

In a case in which the working medium is a single fluid or an azeotropic mixed fluid, the saturated liquid pressure and the saturated vapor pressure at the same temperature are substantially the same. Meanwhile, in a case in which the working medium is a non-azeotropic mixed fluid, the saturated liquid pressure and the saturated vapor pressure at the same temperature have different values.

The evaporation pressure is calculated as follows: evaporation temperature = (evaporation start temperature + evaporation completion temperature)/2, where the evaporation temperature is an average temperature of the evaporation start temperature and the evaporation completion temperature. Therefore, the minimum evaporation pressure in the thermal cycling system can be determined from the saturated vapor pressure at the temperature set and controlled as the evaporation temperature.

Since the condensation pressure is calculated as condensation temperature = (condensation start temperature + condensation completion temperature)/2 where the condensation temperature is the average temperature of the condensation start temperature and the condensation completion temperature, the maximum condensation pressure in the thermal cycling system can be determined by the saturated liquid pressure at the temperature set and controlled as the condensation temperature.

[Table 1]

| | HFO-1123 (mass%) | HFO-1234yf (mass%) | R404A (mass%) | GWP | Saturated vapor pressure (MPa) | Saturated liquid pressure (MPa) | Critical temperature (°C) | Specific heat ratio |
|---|---|---|---|---|---|---|---|---|
| Example 1A | - | - | 100 | 4728 | 0.1310 | 2.885 | 72.12 | 1.1183 |
| Example 1-1 | 31.0 | 69.0 | - | <1 | 0.0888 | 2.557 | 83.19 | 1.1112 |
| Example 1-2 | 31.5 | 68.5 | - | <1 | 0.0893 | 2.572 | 83.02 | 1.1114 |
| Example 1-3 | 34.0 | 66.0 | - | <1 | 0.0920 | 2.645 | 82.17 | 1.1125 |
| Example 1-4 | 34.5 | 65.5 | - | <1 | 0.0926 | 2.660 | 82.00 | 1.1127 |
| Example 1-5 | 36.0 | 64.0 | - | <1 | 0.0943 | 2.704 | 81.50 | 1.1134 |
| Example 1-6 | 38.0 | 62.0 | - | <1 | 0.0967 | 2.763 | 80.83 | 1.1142 |
| Example 1-7 | 39.0 | 61.0 | - | <1 | 0.0979 | 2.792 | 80.49 | 1.1146 |
| Example 1-8 | 39.5 | 60.5 | - | <1 | 0.0985 | 2.807 | 80.32 | 1.1149 |
| Example 1-9 | 40.0 | 60.0 | - | <1 | 0.0991 | 2.822 | 80.16 | 1.1151 |
| Example 1-10 | 40.5 | 59.5 | - | <1 | 0.0998 | 2.836 | 79.99 | 1.1153 |
| Example 1-11 | 41.0 | 59.0 | - | <1 | 0.1004 | 2.851 | 79.82 | 1.1155 |
| Example 1-12 | 41.5 | 58.5 | - | <1 | 0.1010 | 2.866 | 79.65 | 1.1157 |
| Example 1-13 | 42.0 | 58.0 | - | <1 | 0.1017 | 2.881 | 79.49 | 1.1159 |
| Example 1-14 | 42.5 | 57.5 | - | <1 | 0.1023 | 2.896 | 79.32 | 1.1162 |

(continued)

| | HF-O-1123 (mass%) | HF-O-1234yf (mass%) | R404A (mass%) | GWP | Saturated vapor pressure (MPa) | Saturated liquid pressure (MPa) | Critical temperature (°C) | Specific heat ratio |
|---|---|---|---|---|---|---|---|---|
| Example 1-15 | 50.0 | 50.0 | - | <1 | 0.1128 | 3.118 | 76.80 | 1.1195 |

As shown in Table 1, in Examples 1-2 to 1-13, the working medium included the HFO-1123 and the HFO-1234yf, the content of the HFO-1123 was from 31.5 to 42.0 mass% with respect to the total content of the HFO-1123 and the HFO-1234yf, the total content of the HFO-1123 and the HFO-1234yf was 99.0 mass% or more with respect to the total amount of the working medium, the saturated vapor pressure at -40°C was 0.0890 MPa or more, the saturated liquid pressure at 60°C was 2.884 MPa or less, the critical temperature was 79.4°C or higher, and the specific heat ratio was 1.1160 or less.

In Examples 1-4 to 1-13, since the content of the HFO-1123 was from 34.5 to 42.0 mass% with respect to the total content of the HFO-1123 and the HFO-1234yf, the saturated vapor pressure at -40°C was 0.0925 MPa or more.

In Examples 1-4 to 1-7, since the content of the HFO-1123 was from 34.5 to 39.0 mass% with respect to the total content of the HFO-1123 and the HFO-1234yf, the saturated liquid pressure at 60°C was 2.800 MPa or less, the critical temperature was 80.4°C or higher, and the specific heat ratio was 1.1147 or less.

In Examples 1-10 to 1-13, since the content of the HFO-1123 was from 40.5 to 42.0 mass% with respect to the total content of the HFO-1123 and the HFO-1234yf, the saturated vapor pressure at -40°C was 0.0995 MPa or more.

Meanwhile, in Example 1-1, the content of the HFO-1123 was less than 31.5 mass%, and the saturated vapor pressure at -40°C was less than 0.0890 MPa.

In Examples 1-14 and 1-15, the content of the HFO-1123 was more than 42.0 mass%, the saturated liquid pressure at 60°C was more than 2.884 MPa, the critical temperature was less than 79.4°C, and the specific heat ratio was more than 1.1160.

The working medium including HFO-1123 and HFO-1234yf having the composition (mass%) shown in Tables 2 to 4 was evaluated.

For each working medium, a refrigeration cycle state was calculated based on a refrigeration cycle theoretical performance calculation when a condensation temperature, an evaporation temperature, a degree of superheating (SH), a degree of supercooling (SC), and compressor efficiency were set to the following conditions, and a discharge temperature (in the table, described as "Td"), a condensation pressure (in the table, described as "Pc"), an evaporation pressure (in the table, described as "Pe"), an evaporation glide, a condensation glide, a refrigeration effect (in the table, described as "wr"), a coefficient of performance (in the table, described as "COP"), and a capacity per unit volume (in the table, is described as "CAP") were calculated.

The calculation methods for Td, Pc, Pe, evaporation glide, condensation glide, wr, COP, and CAP are as described above. Pc, Pe, wr, COP, and CAP were evaluated in terms of relative values based on the value of R404A (R404A = 1.000).

(Conditions of Examples 2A and 2-1 to 2-15)

· Condensation temperature: 40°C
· Evaporation temperature: -40°C
· Degree of superheating (SH): 20°C
· Degree of subcooling (SC): 0°C
· Compressor efficiency: 0.7

(Conditions of Examples 3A and 3-1 to 3-15)

· Condensation temperature: 40°C
· Evaporation temperature: -20°C
· Degree of superheating (SH): 20°C

· Degree of subcooling (SC): 0°C
· Compressor efficiency: 0.7

(Conditions of Examples 4A, 4B, and 4-1 to 4-15)

· Condensation temperature: 45°C
· Evaporation temperature: 5°C
· Degree of superheating (SH): 5°C
· Degree of subcooling (SC): 5°C
· Compressor efficiency: 0.7

[Table 2]

| | HFO-1123 (mass%) | HFO-1234yf (mass%) | R404A (mass%) | Td (°C) | Pc | Pe | Evaporation glide (°C) | Condensation glide (°C) | wr | COP | CAP |
|---|---|---|---|---|---|---|---|---|---|---|---|
| Example 2A | - | - | 100 | 92.6 | 1.000 | 1.000 | 0.4 | 0.3 | 1.000 | 1.000 | 1.000 |
| Example 2-1 | 31.0 | 69.0 | - | 93.5 | 0.839 | 0.726 | 3.3 | 7.1 | 1.077 | 1.039 | 0.800 |
| Example 2-2 | 31.5 | 68.5 | - | 93.7 | 0.844 | 0.731 | 3.4 | 7.1 | 1.078 | 1.039 | 0.805 |
| Example 2-3 | 34.0 | 66.0 | - | 94.7 | 0.868 | 0.757 | 3.6 | 7.3 | 1.083 | 1.037 | 0.831 |
| Example 2-4 | 34.5 | 65.5 | - | 94.9 | 0.873 | 0.763 | 3.6 | 7.3 | 1.084 | 1.036 | 0.836 |
| Example 2-5 | 36.0 | 64.0 | - | 95.5 | 0.887 | 0.779 | 3.8 | 7.4 | 1.087 | 1.035 | 0.852 |
| Example 2-6 | 38.0 | 62.0 | - | 96.3 | 0.907 | 0.801 | 3.9 | 7.5 | 1.091 | 1.033 | 0.874 |
| Example 2-7 | 39.0 | 61.0 | - | 96.6 | 0.917 | 0.813 | 4.0 | 7.5 | 1.093 | 1.032 | 0.885 |
| Example 2-8 | 39.5 | 60.5 | - | 96.8 | 0.922 | 0.819 | 4.0 | 7.6 | 1.094 | 1.032 | 0.890 |
| Example 2-9 | 40.0 | 60.0 | - | 97.0 | 0.928 | 0.825 | 4.1 | 7.6 | 1.094 | 1.031 | 0.896 |
| Example 2-10 | 40.5 | 59.5 | - | 97.2 | 0.932 | 0.830 | 4.1 | 7.6 | 1.095 | 1.031 | 0.901 |
| Example 2-11 | 41.0 | 59.0 | - | 97.4 | 0.937 | 0.836 | 4.1 | 7.6 | 1.096 | 1.030 | 0.907 |
| Example 2-12 | 41.5 | 58.5 | - | 97.5 | 0.942 | 0.842 | 4.2 | 7.6 | 1.097 | 1.030 | 0.912 |
| Example 2-13 | 42.0 | 58.0 | - | 97.7 | 0.947 | 0.848 | 4.2 | 7.6 | 1.098 | 1.030 | 0.918 |
| Example 2-14 | 42.5 | 57.5 | - | 97.9 | 0.952 | 0.854 | 4.2 | 7.6 | 1.098 | 1.029 | 0.924 |
| Example 2-15 | 50.0 | 50.0 | - | 100.4 | 1.030 | 0.950 | 4.7 | 7.5 | 1.107 | 1.021 | 1.011 |

[Table 3]

| | HFO-1123 (mass%) | HFO-1234yf (mass%) | R404A (mass%) | Td (°C) | Pc | Pe | Evaporation glide (°C) | Condensation glide (°C) | wr | COP | CAP |
|---|---|---|---|---|---|---|---|---|---|---|---|
| Example 3A | - | - | 100 | 80.5 | 1.000 | 1.000 | 0.4 | 0.3 | 1.000 | 1.000 | 1.000 |
| Example 3-1 | 31.0 | 69.0 | - | 81.8 | 0.839 | 0.761 | 4.3 | 7.1 | 1.079 | 1.036 | 0.835 |
| Example 3-2 | 31.5 | 68.5 | - | 82.0 | 0.844 | 0.766 | 4.3 | 7.1 | 1.080 | 1.035 | 0.840 |
| Example 3-3 | 34.0 | 66.0 | - | 82.7 | 0.868 | 0.792 | 4.5 | 7.3 | 1.084 | 1.033 | 0.864 |
| Example 3-4 | 34.5 | 65.5 | - | 82.9 | 0.873 | 0.797 | 4.6 | 7.3 | 1.085 | 1.032 | 0.869 |
| Example 3-5 | 36.0 | 64.0 | - | 83.3 | 0.887 | 0.813 | 4.7 | 7.4 | 1.087 | 1.031 | 0.884 |
| Example 3-6 | 38.0 | 62.0 | - | 83.9 | 0.907 | 0.835 | 4.9 | 7.5 | 1.090 | 1.028 | 0.904 |
| Example 3-7 | 39.0 | 61.0 | - | 84.1 | 0.917 | 0.846 | 4.9 | 7.5 | 1.092 | 1.027 | 0.914 |
| Example 3-8 | 39.5 | 60.5 | - | 84.3 | 0.922 | 0.852 | 5.0 | 7.6 | 1.092 | 1.027 | 0.919 |
| Example 3-9 | 40.0 | 60.0 | - | 84.4 | 0.928 | 0.857 | 5.0 | 7.6 | 1.093 | 1.026 | 0.924 |
| Example 3-10 | 40.5 | 59.5 | - | 84.5 | 0.932 | 0.863 | 5.1 | 7.6 | 1.094 | 1.026 | 0.929 |
| Example 3-11 | 41.0 | 59.0 | - | 84.7 | 0.937 | 0.868 | 5.1 | 7.6 | 1.094 | 1.025 | 0.935 |
| Example 3-12 | 41.5 | 58.5 | - | 84.8 | 0.942 | 0.874 | 5.1 | 7.6 | 1.095 | 1.025 | 0.940 |
| Example 3-13 | 42.0 | 58.0 | - | 84.9 | 0.947 | 0.880 | 5.2 | 7.6 | 1.095 | 1.024 | 0.945 |
| Example 3-14 | 42.5 | 57.5 | - | 85.1 | 0.952 | 0.886 | 5.2 | 7.6 | 1.095 | 1.024 | 0.950 |
| Example 3-15 | 50.0 | 50.0 | - | 86.9 | 1.030 | 0.976 | 5.5 | 7.5 | 1.102 | 1.015 | 1.030 |

[Table 4]

| | HFO-1123 (mass%) | HFO-1234yf (mass%) | R404A (mass%) | Td (°C) | Pc | Pe | Evaporation glide (°C) | Condensation glide (°C) | wr | COP | CAP |
|---|---|---|---|---|---|---|---|---|---|---|---|
| Example 4A | - | - | 100 | 61.4 | 1.000 | 1.000 | 0.4 | 0.3 | 1.000 | 1.000 | 1.000 |
| Example 4B | - | 100 | - | 54.4 | 0.562 | 0.528 | 0.0 | 0.0 | 1.023 | 1.061 | 0.595 |
| Example 4-1 | 31.0 | 69.0 | - | 63.1 | 0.839 | 0.798 | 5.5 | 6.8 | 1.099 | 1.037 | 0.871 |
| Example 4-2 | 31.5 | 68.5 | - | 63.2 | 0.844 | 0.803 | 5.5 | 6.8 | 1.100 | 1.036 | 0.876 |
| Example 4-3 | 34.0 | 66.0 | - | 63.7 | 0.868 | 0.828 | 5.8 | 7.0 | 1.104 | 1.034 | 0.899 |
| Example 4-4 | 34.5 | 65.5 | - | 63.8 | 0.873 | 0.833 | 5.8 | 7.0 | 1.104 | 1.033 | 0.904 |
| Example 4-5 | 36.0 | 64.0 | - | 64.1 | 0.887 | 0.849 | 5.9 | 7.1 | 1.105 | 1.032 | 0.918 |
| Example 4-6 | 38.0 | 62.0 | - | 64.5 | 0.907 | 0.869 | 6.1 | 7.2 | 1.107 | 1.030 | 0.937 |
| Example 4-7 | 39.0 | 61.0 | - | 64.7 | 0.917 | 0.880 | 6.1 | 7.2 | 1.108 | 1.029 | 0.946 |
| Example 4-8 | 39.5 | 60.5 | - | 64.7 | 0.922 | 0.885 | 6.2 | 7.2 | 1.109 | 1.028 | 0.951 |
| Example 4-9 | 40.0 | 60.0 | - | 64.8 | 0.926 | 0.890 | 6.2 | 7.2 | 1.109 | 1.027 | 0.955 |
| Example 4-10 | 40.5 | 59.5 | - | 64.9 | 0.931 | 0.896 | 6.2 | 7.2 | 1.109 | 1.027 | 0.960 |
| Example 4-11 | 41.0 | 59.0 | - | 65.0 | 0.937 | 0.901 | 6.3 | 7.2 | 1.110 | 1.026 | 0.965 |
| Example 4-12 | 41.5 | 58.5 | - | 65.1 | 0.942 | 0.907 | 6.3 | 7.2 | 1.110 | 1.026 | 0.970 |
| Example 4-13 | 42.0 | 58.0 | - | 65.2 | 0.946 | 0.912 | 6.3 | 7.2 | 1.111 | 1.025 | 0.974 |
| Example 4-14 | 42.5 | 57.5 | - | 65.3 | 0.952 | 0.918 | 6.3 | 7.2 | 1.111 | 1.024 | 0.979 |
| Example 4-15 | 50.0 | 50.0 | - | 66.4 | 1.029 | 1.002 | 6.5 | 7.1 | 1.112 | 1.015 | 1.051 |

From Tables 2 to 4, it has been found that, in the refrigeration cycle using the working medium in which the content of the HFO-1123 is from 31.5 to 42.0 mass%, the refrigeration effect tends to be 1.078 or more, the COP tends to be 1.024 or more, and the CAP tends to be 0.805 or more as relative values based on R404A.

In addition, it has been found that, in the refrigeration cycle using the working medium in which the content of the HFO-1123 is 34.5 to 42.0 mass%, the refrigeration effect tends to be 1.084 or more, the COP tends to be 1.024 or more, and the CAP tends to be 0.835 or more as a relative value based on R404A.

In addition, it has been found that, in the refrigeration cycle using the working medium in which the content of the HFO-1123 is 34.5 to 39.0 mass%, the refrigeration effect tends to be 1.084 or more, the COP tends to be 1.027 or more, and the CAP tends to be 0.835 or more as a relative value based on R404A.

In addition, it has been found that, in the refrigeration cycle using the working medium in which the content of the HFO-1123 is 40.5 to 42.0 mass%, the refrigeration effect tends to be 1.093 or more, the COP tends to be 1.024 or more, and the CAP tends to be 0.901 or more as a relative value based on R404A.

As described above, according to the thermal cycling system of the disclosure using the working medium as a substitute for R404A, excellent cycle performance can be obtained.

From Table 4, it has been found that, in the refrigeration cycle using the working medium in which the content of the HFO-1123 is from 31.5 to 42.0 mass%, the refrigeration effect tends to be 1.075 or more, the COP tends to be 0.966 or more, and the CAP tends to be 1.472 or more as relative values based on HFO-1234yf.

As described above, according to the thermal cycling system of the disclosure using the working medium as a substitute for HFO-1234yf, excellent cycle performance can be obtained.

The entire disclosures of Japanese Patent Application No. 2023-090428 filed on May 31, 2023, and Japanese Patent Application No. 2023-130517 filed on August 9, 2023 are incorporated herein by reference. All the literature, patent application, and technical standards cited herein are also herein incorporated to the same extent as provided for specifically and severally with respect to an individual literature, patent application, and technical standard to the effect that the same should be so incorporated by reference.

**Claims**

1. A thermal cycling system, comprising:

   a working medium;
   a compressor that compresses a vapor of the working medium;
   a condenser that cools and liquefies the vapor of the working medium discharged from the compressor;
   a pressure reducing device that reduces a pressure of the working medium discharged from the condenser; and
   an evaporator that heats the working medium discharged from the pressure reducing device,
   wherein:

   the working medium includes trifluoroethylene and 2,3,3,3-tetrafluoropropene,
   a content of the trifluoroethylene is from 31.5 to 42.0 mass% with respect to a total content of the trifluoroethylene and the 2,3,3,3-tetrafluoropropene,
   the total content of the trifluoroethylene and the 2,3,3,3-tetrafluoropropene is 99.0 mass% or more with respect to a total amount of the working medium, and
   the evaporator is controlled such that an evaporation temperature of the working medium is -40°C or higher.

2. The thermal cycling system according to claim 1, wherein the content of the trifluoroethylene is from 34.5 to 42.0 mass% with respect to the total content of the trifluoroethylene and the 2,3,3,3-tetrafluoropropene.

3. The thermal cycling system according to claim 1, wherein the content of the trifluoroethylene is from 34.5 to 39.0 mass% with respect to the total content of the trifluoroethylene and the 2,3,3,3-tetrafluoropropene.

4. The thermal cycling system according to claim 1, wherein the content of the trifluoroethylene is from 40.5 to 42.0 mass% with respect to the total content of the trifluoroethylene and the 2,3,3,3-tetrafluoropropene.

5. A thermal cycling method, comprising:

   compressing a vapor of a working medium;
   cooling and liquefying the vapor of the working medium;
   reducing a pressure of the liquefied working medium; and

heating the pressure-reduced working medium at an evaporation temperature of -40°C or higher,
wherein:

the working medium includes trifluoroethylene and 2,3,3,3-tetrafluoropropene,
a content of the trifluoroethylene is from 31.5 to 42.0 mass% with respect to a total content of the trifluoroethylene and the 2,3,3,3-tetrafluoropropene, and
the total content of the trifluoroethylene and the 2,3,3,3-tetrafluoropropene is 99.0 mass% or more with respect to a total amount of the working medium.

FIG.1

# FIG.2

# FIG.3A

# FIG.3B

## INTERNATIONAL SEARCH REPORT

| | International application No. |
|---|---|
| | **PCT/JP2024/009628** |

### A. CLASSIFICATION OF SUBJECT MATTER

*F25B 1/00*(2006.01)i; *C09K 5/04*(2006.01)i
FI: F25B1/00 396Z; C09K5/04 F ZAB

According to International Patent Classification (IPC) or to both national classification and IPC

### B. FIELDS SEARCHED

Minimum documentation searched (classification system followed by classification symbols)

F25B1/00: C09K5/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2015/141676 A1 (ASAHI GLASS CO., LTD.) 24 September 2015 (2015-09-24) paragraphs [0130]-[0139], fig. 1 | 1-5 |
| A | WO 2017/145245 A1 (MITSUBISHI ELECTRIC CORPORATION) 31 August 2017 (2017-08-31) entire text, all drawings | 1-5 |
| A | WO 2015/005290 A1 (ASAHI GLASS CO., LTD.) 15 January 2015 (2015-01-15) entire text, all drawings | 1-5 |
| A | JP 7249498 B1 (DAIKIN INDUSTRIES, LTD.) 31 March 2023 (2023-03-31) entire text, all drawings | 1-5 |

☐ Further documents are listed in the continuation of Box C.      ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

### INTERNATIONAL SEARCH REPORT
Information on patent family members

| Patent document cited in search report | | | Publication date (day/month/year) | Patent family member(s) | | | Publication date (day/month/year) |
|---|---|---|---|---|---|---|---|
| WO | 2015/141676 | A1 | 24 September 2015 | US | 2016/0369145 | A1 | |
| | | | | paragraphs [0156]-[0167], fig. 1 | | | |
| | | | | EP | 3121243 | A1 | |
| | | | | CN | 106029821 | A | |
| WO | 2017/145245 | A1 | 31 August 2017 | (Family: none) | | | |
| WO | 2015/005290 | A1 | 15 January 2015 | US | 2016/0075927 | A1 | |
| | | | | EP | 3020780 | A1 | |
| | | | | CN | 105452417 | A | |
| JP | 7249498 | B1 | 31 March 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015005290 A
- JP 7249498 B
- JP 2023090428 A
- JP 2023130517 A

**Non-patent literature cited in the description**

- **AKASAKA, R** ; **HIGASHI, Y.** ; **SAKODA, N.** ; **FUKUDA, S** ; **LEMMON, E.W.** Thermodynamic properties of trifluoroethene (R1123): (p, $\rho$, T) behavior and fundamental equation of state. *International Journal of Refrigeration.*, 2020, vol. 119, 457-467
- **AKASAKA, R.** ; **LEMMON, E.W**. A New Fundamental Equation of State for R1123 and its Applications to Mixture Models for Mixtures with R32 and R1234yf. *The 6th IIR Conference on Thermophysical Properties and Transfer Processes of Refrigerants*, 2021
- Designation and Safety Classification of Refrigerants. *ANSI/ASHRAE Standard*, 2016, 34
- **S. BENSON**. Thermo chemical kinetics. Wiley Interscience, 1976
- Refrigerant: Designation and Safety Classification. *ISO 817*, 2014